# EUROPÄISCHE PATENTSCHRIFT

(11) **EP 2 154 404 B1**
(45) Veröffentlichungstag und Bekanntmachung des Hinweises auf die Patenterteilung: **11.12.2019**
(21) Anmeldenummer: 09008352.8
(22) Anmeldetag: 26.06.2009
(51) Int. Cl.: F16L 11/11, F16L 11/118

(54) **Fluidleitung**
Fluid tube
Conduite de fluide

(30) Priorität: 14.08.2008 DE 102008037740
(43) Veröffentlichungstag der Anmeldung: 17.02.2010
(73) Patentinhaber: NORMA Germany GmbH, 63477 Maintal (DE)
(72) Erfinder: Palmeri, Gaëtan, 57360 Malancourt la Montagne (FR)
(74) Vertreter: Patentanwälte Olbricht Buchhold Keulertz

(56) Entgegenhaltungen:
- EP-A2- 1 219 757
- DE-A1- 3 151 845

## Beschreibung

Die Erfindung betrifft eine Fluidleitung mit mindestens einem gewellten Abschnitt, der Wellenberge und Wellentäler aufweist.

Eine derartige Fluidleitung ist beispielsweise aus DE 44 32 584 C1 bekannt. Im gewellten Abschnitt kann eine derartige Leitung gebogen werden. Damit erreicht man zum Einen eine größere Freiheit bei der Leitungsführung. Zum Anderen ist es mit einer derartigen Fluidleitung auch möglich, Elemente miteinander zu verbinden, deren Positionen relativ zueinander sich ändern. Ein Anwendungsbeispiel ist die Verwendung in einem Kraftfahrzeug, beispielsweise als Leitung für eine Flüssigkeit.

Der gewellte Abschnitt ermöglicht zwar, die Leitung zu biegen. Er hat aber den Nachteil, dass die Fluidleitung im gewellten Abschnitt eine verminderte Formstabilität aufweist. Insbesondere besteht das Risiko, dass die Fluidleitung im gewellten Abschnitt ihre Länge ändert, wenn in ihr Druckschwankungen auftreten. Bei Kunststoff-Fluidleitungen gilt dies insbesondere dann, wenn gleichzeitig eine höhere Temperatur herrscht.

Man hat daher in der eingangs genannten DE 44 32 584 C1 vorgeschlagen, jeweils zwei benachbarte Wellenberge durch Stege miteinander zu verbinden, wobei die Stege in benachbarten Wellentälern in Umfangsrichtung der Leitung um 90° zueinander versetzt sind. In einer alternativen Ausgestaltung wird vorgeschlagen, die Wellenberge in ovaler Form oder in Form einer Ellipse auszubilden oder in Form eines an einer Seite abgeflachten Kreises. Allerdings kann man beobachten, dass auch bei einer derartigen Ausgestaltung unzulässig große Längenänderungen auftreten, wenn sich der Druck im Inneren der Fluidleitung ändert.

Eine ähnliche Ausgestaltung ist aus DE 197 07 518 C1 bekannt. Hier sind zwei einander ungefähr gegenüberliegende Mantellinien der Mantelfläche der Fluidleitung frei von Wellenbergen gehalten. Diese Mantellinien erstrecken sich in Längsrichtung der Fluidleitung. Auch hier kann man allerdings beobachten, dass Längenänderungen auftreten, die für viele Anwendungszwecke, insbesondere im Kraftfahrzeugbereich, nicht mehr tolerierbar sind. Wenn eine derartige Fluidleitung beispielsweise in einem Motorraum eines Kraftfahrzeugs eingebaut ist und sich ihre Länge oder ihr Durchmesser über ein vorbestimmtes Maß hinaus vergrößert, dann besteht die Gefahr, dass die Fluidleitung an anderen Teilen, die im Motorraum angeordnet sind, oder an einer Begrenzungswand des Motorraumes zur Anlage kommt und bei den in einem Kraftfahrzeug unvermeidlichen Schwingungen dort scheuert. Dies führt über kurz oder lang zu einer Beschädigung der Fluidleitung.

Die EP 1 219 757 A2 offenbart eine gewellte Fluidleitung wobei die Wellenberge durch Kanäle verbunden sind. Die Kanäle dienen der Versteifung der Fluidleitung.

Der Erfindung liegt die Aufgabe zugrunde, eine Längenänderung bei einer Fluidleitung mit mindestens einem gewellten Abschnitt klein zu halten.

Diese Aufgabe wird bei einer Fluidleitung der eingangs genannten Art dadurch gelöst, dass zumindest in einem Teilabschnitt des Abschnitts alle Wellenberge durch mindestens einen Zuganker miteinander verbunden sind. Der Zuganker verhindert damit zuverlässig, dass sich Wellenberge voneinander entfernen und zwar im gesamten Teilabschnitt. Ein Teilabschnitt weist eine größere Anzahl von Wellenbergen und Wellentälern auf, damit er in einem ausreichenden Maße gebogen oder gekrümmt werden kann. Vorzugsweise weist ein Teilabschnitt mindestens fünf Wellenberge auf. Die Zuganker haben eine praktisch unveränderbare Länge. Sie können ihre Länge nur in dem Maße verändern, wie sich das Material, aus dem die Zuganker gebildet sind, an sich verändert. Da der Zuganker mehrere benachbarte Wellentäler überbrückt, ist der Teilabschnitt in allen diesen Wellentälern längenstabil, d.h. unabhängig von den Drücken, die im Innern der Fluidleitung wirken, kann sich der Abstand aller Wellenberge in dem Teilabschnitt praktisch nicht verändern. Eine Längenänderung bleibt kleiner als 5 %. Die Form der Fluidleitung bleibt nach einer Thermofixierung in besonders gutem Maße erhalten.

Vorzugsweise sind die Wellenberge durch zwei Zuganker miteinander verbunden, die einander diametral gegenüberliegen. Damit ergibt sich eine weiter verbesserte Längenkonstanz des Teilabschnitts. Die Haltekräfte, die eine Längenänderung bei einer Druckänderung entgegen wirken, werden damit praktisch verdoppelt und in günstiger Weise über den Umfang der Fluidleitung verteilt. Vorzugsweise füllt der Zuganker die Wellentäler zwischen den Wellenbergen aus. Dies ist so zu verstehen, dass der Zuganker vom Wellental aus eine radiale Erstreckung aufweist, die der Höhe der Wellenberge entspricht, wobei eine Abweichung von ± 30 % zulässig ist. Im Allgemeinen wird es aber vorteilhaft sein, wenn der Zuganker außen etwa mit den Wellenbergen abschließt.

Vorzugsweise weist die Fluidleitung im Bereich der Wellentäler einen Innenquerschnitt auf, der einem Außenquerschnitt der Fluidleitung folgt. Dementsprechend weist die Fluidleitung im Bereich des Zugankers eine radial nach außen vom Wellental vorstehende Ausnehmung auf. Dies erleichtert die Herstellung und hält den Materialverbrauch und damit die Masse der Fluidleitung klein.

Erfindungsgemäß ist vorgesehen, dass in in Längsrichtung benachbarten Teilabschnitten Zuganker angeordnet sind, die um einen vorbestimmten Winkel in Umfangsrichtung der Fluidleitung gegeneinander versetzt sind. Damit können diese Teilabschnitte in unterschiedliche Richtungen gekrümmt werden.

Hierbei ist vorgesehen, dass sich die Zuganker benachbarter Teilabschnitte in Längsrichtung der Fluidleitung um mindestens ein Wellental überlappen. Damit wird eine über zwei benachbarte Teilabschnitte durchgehende Längenkonstanz erreicht, auch wenn diese Teilabschnitte in unterschiedliche Richtungen gekrümmt sind. Vorzugsweise ist der Abschnitt vollständig von mindestens einem Zuganker oder mehreren in Längsrichtung überlappenden Zugankern überbrückt. Dies ist insbesondere dann von Vorteil, wenn der Abschnitt zwischen zwei Bereichen der Fluidleitung angeordnet ist, die in sich form- und damit auch längsstabil sind. Dadurch, dass eine durchgehende Längenänderungs-Sicherung im Abschnitt vorgesehen ist, kann sich die gesamte Länge der Fluidleitung nur in einem zulässigen Maße verändern. Auch ist von Vorteil, wenn der Zuganker in Umfangsrichtung eine Breite B = D/2 ± 20 % aufweist, wobei D ein Innendurchmesser des Wellentals der Fluidleitung außerhalb des Zugankers ist. Damit hat der Zuganker in Umfangsrichtung eine relativ große Breite, so dass er auch größeren Kräften, die ansonsten zu einer Längenänderung führen würden, standhalten kann. Er ist aber andererseits noch schmal genug, um eine Krümmung der Fluidleitung in den Teilabschnitt zu erlauben.

Vorzugsweise weist der Zuganker in Längsrichtung verlaufende Flanken auf, die unter einem Winkel im Bereich von 0° bis 45° zur Radialrichtung verlaufen. Im Querschnitt hat der Zuganker also die Form eines Rechtecks oder eines Trapezes oder einer Kombination davon, d.h. die Winkel der beiden Flanken müssen nicht gleich sein. Der genaue Winkel richtet sich unter anderem nach der Wanddicke der Fluidleitung, nach dem gewünschten Krümmungsradius der Fluidleitung in den Teilabschnitt und gegebenenfalls nach dem verwendeten Herstellungsverfahren.

Bevorzugterweise weist die Fluidleitung im Teilabschnitt eine Form eines Bogens auf, wobei der Zuganker in Umfangsrichtung zwischen einer Innenkrümmung und einer Außenkrümmung des Bogens angeordnet ist. Bei der Innenkrümmung des Bogens wird die Fluidleitung gestaucht. Bei der Außenkrümmung des Bogens wird die Fluidleitung gedehnt. Das Stauchen und das Dehnen werden durch die Wellenberge und die Wellentäler ermöglicht. Der Zuganker liegt hingegen in einem Bereich, der praktisch nicht oder nur in einem geringen Umfang gestaucht oder gedehnt wird. Diese kleinen Stauch- oder Dehnvorgänge können von dem Material des Zugankers aufgenommen werden.

Auch ist von Vorteil, wenn mindestens ein Wellental im Abschnitt nicht von einem Zuganker überbrückt ist. In diesem Bereich ist dann die Verstärkung unterbrochen und es ist das Risiko einer Längenänderung gegeben. Wenn sich dieses Risiko aber auf ein Wellental begrenzt, kann es in Kauf genommen werden, wenn man dafür eine verbesserte Formgebung der Fluidleitung erreichen kann.

Die Erfindung wird im Folgenden anhand von bevorzugten Ausführungsbeispielen in Verbindung mit der Zeichnung beschrieben. Hierin zeigen:
- Fig. 1: eine erste Ausführungsform einer Fluidleitung mit einem gewellten Abschnitt,
- Fig. 2: eine nicht erfindungsgemäße Ausführungsform des gewellten Abschnitts,
- Fig. 3: eine weitere nicht erfindungsgemäße Ausführungsform des gewellten Abschnitts,
- Fig. 4: eine Seitenansicht eines Ausschnitts des gewellten Abschnitts nach Fig. 1 und
- Fig. 5: einen Schnitt V-V nach Fig. 4.

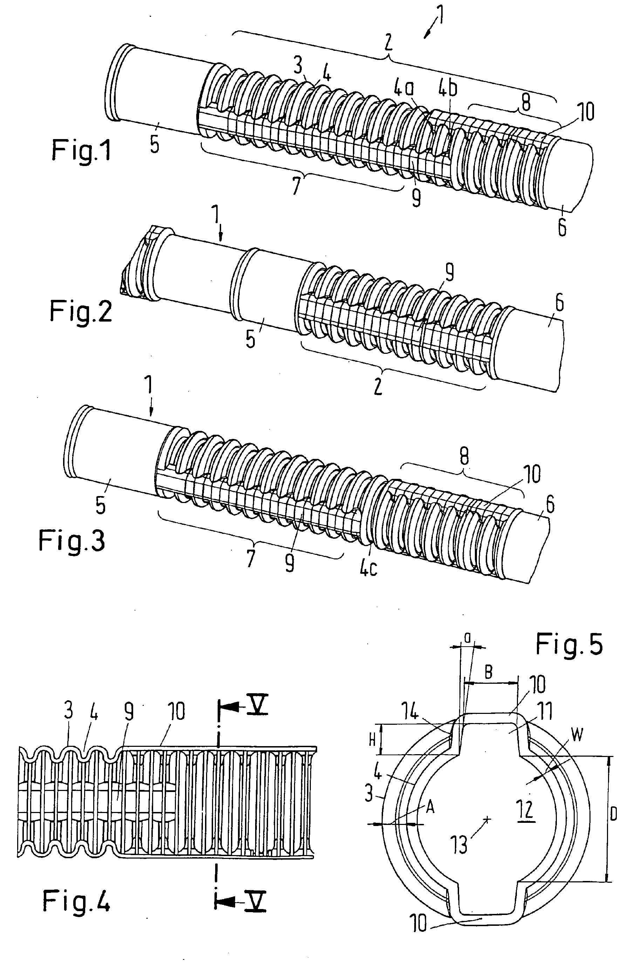

Fig. 1 zeigt eine Fluidleitung 1 mit einem gewellten Abschnitt 2, der Wellenberge 3 und dazwischen Wellentäler 4 aufweist.

An den gewellten Abschnitt 2 schließt sich an einem Ende ein ungewellter Abschnitt 5 und am anderen Ende ein ungewellter Abschnitt 6 an. Der gewellte Abschnitt 2 ist unterteilt in zwei Teilabschnitte 7, 8, die später in unterschiedliche Richtungen gebogen werden sollen. Jeder Teilabschnitt 7, 8 weist mindestens drei, vorzugsweise mindestens fünf Wellenberge 3 und entsprechend zwei oder vorzugsweise vier Wellentäler 4 auf, um überhaupt einen nennenswerten Biegungswinkel realisieren zu können.

In jedem Teilabschnitt 7, 8 sind alle Wellenberge 3 durch einen Zuganker 9, 10 miteinander verbunden. Dementsprechend können sich die Wellenberge 3, die durch den Zuganker 9, 10 miteinander verbunden sind, weder voneinander entfernen noch aneinander annähern. Damit stellt der Zuganker 9, 10 sicher, dass im Teilabschnitt 7, 8 praktisch keine Längenänderung auftreten kann, die über eine Ausdehnung oder Schrumpfung des Materials hinausgeht, aus dem die Zuganker 9, 10 gebildet sind. Der Einfachheit halber wird dies als "Längenkonstanz" bezeichnet, auch wenn eine echte Konstanz der Länge in der Regel nicht erreicht werden kann. Eine Längenänderung von 5 % wird noch als akzeptabel angesehen. In vielen Fällen ergibt sich durch den Zuganker aber eine Längenänderung von 4 %, 3 % oder sogar nur 2 %.Vorzugsweise ist das Material des Zugankers 9, 10 das Gleiche wie das Material der Fluidleitung 1.

Wie man aus Fig. 5 erkennen kann, ist dem Zuganker 10 gegenüberliegend, also um 180° in Umfangsrichtung versetzt, ein weiterer Zuganker 10 angeordnet, der ebenfalls alle Wellenberge 3 des Teilabschnitts 8 miteinander verbindet. Eine Krümmung des Teilabschnitts 8 ist daher nur so möglich, dass ein Bogen entsteht, bei dem der Zuganker 10 zwischen einer Innenkrümmung des Bogens und einer Außenkrümmung angeordnet ist. Der Abschnitt 6 kann also, bezogen auf die Darstellung der Fig. 1, gegenüber dem Abschnitt 5 nach vorne oder nach hinten gebogen werden.

In entsprechender Weise kann im Teilabschnitt 7, bei dem der Zuganker 9 gegenüber dem Zuganker 10 um 90° in Umfangsrichtung versetzt ist, der Abschnitt 6 gegenüber dem Abschnitt 5 nach oben oder unten gebogen werden. Andere Biegungen werden durch den Zuganker 9 verhindert.

Die beiden Zuganker 9, 10 überlappen sich in zwei Wellentälern 4a, 4b. Dementsprechend ist der Abschnitt 2 vollständig von zwei einander überlappenden Zugankern 9, 10 überbrückt. Eine Längenänderung zwischen den beiden Abschnitten 5, 6 wird damit zumindest weitgehend vermieden.

Auch beim Zuganker 9 ist auf der gegenüberliegenden Seite ein entsprechender Zuganker angeordnet, der in Fig. 1 nicht erkennbar ist.

Der Zuganker 9, 10 füllt die Wellentäler 4 zwischen den Wellenbergen 3 eines Teilabschnitts 7, 8 vollständig aus. Dargestellt ist, dass der Zuganker 9, 10 etwa mit den Wellenbergen 3 radial nach außen abschließt. Seine radiale Erstreckung, d.h. seine Höhe H kann jedoch um 30 % größer oder kleiner sein als ein Unterschied A zwischen dem Fuß eines Wellentales 4 und der Spitze eines Wellenberges 3.

Der Zuganker bildet, wie dies in Fig. 5 zu erkennen ist, einen Hohlraum 11 aus, der mit dem Innenraum 12 der Fluidleitung 1 in Verbindung steht. Mit anderen Worten weist der Innenraum 12 eine radiale Ausbuchtung dort auf, wo der Zuganker 10 und ein Wellental 4 zusammentreffen. Sämtliche Richtungsangaben wie radial und axial beziehen sich auf eine Achse 13 der Fluidleitung. Die Innenkontur eines Wellentales 4 folgt damit der Außenkontur.

Der Zuganker 10 (Gleiches gilt in entsprechender Weise für den Zuganker 9) weist eine Erstreckung B in Umfangsrichtung, d.h. eine Breite auf, für die gilt:
B = D/2 ± 20 %, wobei D der Innendurchmesser der Fluidleitung 1 im Bereich eines Wellentales 4 außerhalb des Zugankers 10 ist. W ist die Wandstärke der Fluidleitung. Dadurch ergibt sich eine relativ große Breite des Zugankers 10, die einerseits eine Biegung des Teilabschnitts 8 zulässt, andererseits aber eine ausreichende Stabilität gegen eine Längenänderung bietet.

Der Zuganker 10 hat im Querschnitt die Form eines Rechtecks oder eines Trapezes. Er weist Flanken 14 auf, die in Längsrichtung verlaufen und mit der Radialrichtung einen Winkel a im Bereich von 0° bis 45° einschließen. Die Größe des Winkels a richtet sich nach der Wandstärke W, nach dem Herstellungsverfahren, nach der gewünschten Krümmung der Fluidleitung im gewellten Bereich, nach dem verwendeten Material und dergleichen. Der Winkel a muss nicht für beide Flanken 14 gleich sein. So kann man auf der Innenseite einer Krümmung einen kleineren Winkel a verwenden als auf der Außenseite.

Die Fluidleitung 1 ist vorzugsweise aus einem Kunststoffmaterial gebildet. Als Kunststoffmaterialien kommen insbesondere Polymere oder Polymerkombinationen, vorzugsweise thermoplastische Polymermaterialien in Betracht, wie sie beispielsweise in DE 44 32 584 C1 angegeben sind.

Fig. 2 zeigt eine abgewandelte Ausführungsform des Abschnitts 2, bei dem nur ein Teilabschnitt vorhanden ist. Dieser Teilabschnitt ist vollständig durch die beiden Zuganker 9 aufeinander diametral gegenüberliegenden Seiten der Fluidleitung 1 überbrückt, d.h. der Zuganker 9 verbindet die beiden Abschnitte 5, 6 an den beiden Enden des gewellten Abschnitts 2.

Fig. 3 zeigt eine Abwandlung gegenüber Fig. 1, bei der wiederum zwei Teilabschnitte 7, 8 vorgesehen sind. Im Teilabschnitt 7 sind zwei Zuganker 9 vorgesehen und im Teilabschnitt 8 sind zwei Zuganker 10 vorgesehen. Zwischen den beiden Teilabschnitten 7, 8 ist jedoch ein Wellental 4c vorhanden, in dem überhaupt kein Zuganker vorgesehen ist. Dieses Wellental kann verwendet werden, um eine stärkere Biegung der Fluidleitung 1 in eine beliebige Richtung zu ermöglichen.

In allen Figuren sind gleiche untereinander entsprechende Elemente mit den gleichen Bezugszeichen versehen.

Durch die Verwendung des oder der Zuganker 9, 10 ergibt sich der zusätzliche Vorteil einer verbesserten Thermofixierung. Die Form der Fluidleitung 1 bleibt aufgrund des oder der Zuganker 9, 10 nach dem Abkühlen besser erhalten als bisher.

## Patentansprüche

1. Fluidleitung (1) mit mindestens einem gewellten Abschnitt (2), der Wellenberge (3) und Wellentäler (4) aufweist, wobei zumindest in einem ersten Teilabschnitt (7) des Abschnitts (2) alle Wellenberge (3) durch mindestens einen ersten Zuganker (9) miteinander verbunden sind und in einem in Längsrichtung zum ersten Teilabschnitt (7) benachbarten zweiten Teilabschnitt (8) des Abschnitts (2) alle Wellenberge (3) durch mindestens einen zweiten Zuganker (10) miteinander verbunden sind, **dadurch gekennzeichnet, dass** der erste und der zweite Zuganker (9, 10) um einen vorbestimmten Winkel in Umfangsrichtung der Fluidleitung (1) gegeneinander versetzt angeordnet sind, wobei sich der erste und der zweite Zuganker (9, 10) in Längsrichtung der Fluidleitung (1) lediglich zwischen dem ersten Teilabschnitt (7) und dem zweiten Teilabschnitt (8) um mindestens ein Wellental (4a, 4b) überlappen, und wobei die benachbarten Teilabschnitte (7, 8) in jeweils unterschiedliche Richtungen krümmbar sind.

2. Fluidleitung nach Anspruch 1, **dadurch gekennzeichnet, dass** die Wellenberge (3) durch zwei Zuganker (9, 10) miteinander verbunden sind, die einander diametral gegenüberliegen.

3. Fluidleitung nach Anspruch 1 oder 2, **dadurch gekennzeichnet, dass** der Zuganker (9, 10) die Wellentäler (4, 4a, 4b) zwischen den Wellenbergen (3) ausfüllt.

4. Fluidleitung nach Anspruch 3, **dadurch gekennzeichnet, dass** sie im Bereich der Wellentäler (4) einen Innenquerschnitt aufweist, der einem Außenquerschnitt der Fluidleitung (1) folgt.

5. Fluidleitung nach einem der Ansprüche 1 bis 4, **dadurch gekennzeichnet, dass** der Abschnitt (2) vollständig von mindestens einem Zuganker (9) oder mehreren in Längsrichtung überlappenden Zugankern (9, 10) überbrückt ist.

6. Fluidleitung nach einem der Ansprüche 1 bis 5, **dadurch gekennzeichnet, dass** der Zuganker (9, 10) in Umfangsrichtung eine Breite B = D/2 ± 20 % aufweist, wobei D ein Innendurchmesser des Wellentales (4) außerhalb des Zugankers (10) ist.

7. Fluidleitung nach einem der Ansprüche 1 bis 6, **dadurch gekennzeichnet, dass** der Zuganker (9, 10) in Längsrichtung verlaufende Flanken (14) aufweist, die unter einem Winkel a im Bereich von 0° bis 45° zur Radialrichtung verlaufen.

8. Fluidleitung nach einem der Ansprüche 1 bis 7, **dadurch gekennzeichnet, dass** sie im Teilabschnitt (7, 8) eine Form eines Bogens aufweist, wobei der Zuganker (9, 10) in Umfangsrichtung zwischen einer Innenkrümmung und einer Außenkrümmung des Bogens angeordnet ist.

9. Fluidleitung nach einem der Ansprüche 1 bis 8, **dadurch gekennzeichnet, dass** mindestens ein Wellental (4c) im Abschnitt (2) nicht von einem Zuganker (9, 10) überbrückt ist.

## Claims

1. Fluid tube (1) with at least one corrugated section (2), which has wave peaks (3) and wave troughs (4), wherein at least in a first partial section (7) of the section (2) all wave peaks (3) are joined together by at least one first tie rod (9) and in a second partial section (8) of the section (2), which is adjacent to the first partial section (7) in longitudinal direction, all wave peaks (3) are joined together by at least one second tie rod (10), **characterised in that** the first and the second tie rods (9, 10) are arranged to be staggered relative to one another by a predefined angle in circumferential direction of the fluid tube (1), wherein the first and the second ties rods (9, 10) overlap simply between the first partial section (7) and the second partial section (8) by at least one wave trough (4a, 4b) in longitudinal direction of the fluid tube (1) and wherein the adjacent partial sections (7, 8) can be curved in different directions respectively.

2. Fluid tube according to claim 1, **characterised in that** the wave peaks (3) are joined together by two tie rods (9, 10), which are diametrically opposite one another.

3. Fluid tube according to claim 1 or 2, **characterised in that** the tie rod (9, 10) fills out the wave troughs (4, 4a, 4b) between the wave peaks (3).

4. Fluid tube according to claim 3, **characterised in that** in the region of the wave troughs (4) it has an inner cross-section which follows an outer cross-section of the fluid tube (1).

5. Fluid tube according to any of claims 1 to 4, **characterised in that** the section (2) is completely spanned by at least one tie rod (9) or a plurality of tie rods (9, 10) that overlap one another in longitudinal direction.

6. Fluid tube according to any of claims 1 to 5, **characterised in that** the tie rod (9, 10) has a width B = D/2 ± 20 % in circumferential direction, wherein D is an inner diameter of the wave trough (4) outside the tie rod (10).

7. Fluid tube according to any of claims 1 to 6, **characterised in that** the tie rod (9, 10) has flanks (14) in longitudinal direction which run at an angle a in the range of 0° to 45° relative to the radial direction.

8. Fluid tube according to any of claims 1 to 7, **characterised in that** in partial section (7, 8) it has a form of an arc, wherein the tie rod (9, 10) is arranged in circumferential direction between an inner curvature and an outer curvature of the arc.

9. Fluid tube according to any of claims 1 to 8, **characterised in that** at least one wave trough (4c) is not spanned by a tie rod (9, 10) in section (2).

## Revendications

1. Conduite fluidique (1) avec au moins une section ondulée (2) qui présente des sommets (3) et des creux (4), dans laquelle au moins dans une première section partielle (7) de la section (2) tous les sommets (3) sont reliés entre eux par au moins un premier tirant d'ancrage (9) et dans une seconde section partielle (8) contiguë dans le sens longitudinal à la première section partielle (7) de la section (2) tous les sommets (3) sont reliés entre eux par au moins un second tirant d'ancrage (10), **caractérisée en ce que** le premier et le second tirant d'ancrage (9, 10) sont agencés en déport l'un de l'autre d'un angle prédéterminé dans le sens périphérique de la conduite fluidique (1), dans laquelle le premier et le second tirant d'ancrage (9, 10) se recouvrent dans le sens longitudinal de la conduite fluidique (1) juste entre la première section partielle (7) et la seconde section partielle (8) d'au moins un creux (4a, 4b), et dans lequel les sections partielles contiguës (7, 8) peuvent être courbées dans respectivement différents sens.

2. Conduite fluidique selon la revendication 1, **caractérisée en ce que** les sommets (3) sont reliés entre eux par deux tirants d'ancrage (9, 10) qui sont diamétralement opposés l'un à l'autre.

3. Conduite fluidique selon la revendication 1 ou 2, **caractérisée en ce que** le tirant d'ancrage (9, 10) remplit les creux (4, 4a, 4b) entre les sommets (3).

4. Conduite fluidique selon la revendication 3, **caractérisée en ce qu'**elle présente dans la zone des creux (4) une section transversale intérieure qui suit une section transversale extérieure de la conduite fluidique (1).

5. Conduite fluidique selon l'une des revendications 1 à 4, **caractérisée en ce que** la section (2) est surmontée complètement par au moins un tirant d'ancrage (9) ou plusieurs tirants d'ancrage (9, 10) de recouvrement dans le sens longitudinal.

6. Conduite fluidique selon l'une des revendications 1 à 5, **caractérisée en ce que** le tirant d'ancrage (9, 10) présente dans le sens périphérique une largeur B = D/2 ± 20 %, dans laquelle D est un diamètre intérieur du creux (4) en dehors du tirant d'ancrage (10).

7. Conduite fluidique selon l'une des revendications 1 à 6, **caractérisée en ce que** le tirant d'ancrage (9, 10) présente des flancs (14) s'étendant dans le sens longitudinal qui s'étendent sous un angle a dans la plage de 0° à 45°.

8. Conduite fluidique selon l'une des revendications 1 à 7, **caractérisée en ce qu'**elle présente dans la section partielle (7, 8) une forme d'arc, dans laquelle le tirant d'ancrage (9, 10) est agencé dans le sens périphérique entre une courbure intérieure et une courbure extérieure de l'arc.

9. Conduite fluidique selon l'une des revendications 1 à 8, **caractérisée en ce qu'**au moins un creux (4c) n'est pas recouvert dans la section (2) par un tirant d'ancrage (9, 10).
